# EUROPÄISCHE PATENTANMELDUNG

(11) **EP 4 560 491 A1**
(43) Veröffentlichungstag der Anmeldung: **28.05.2025**
(21) Anmeldenummer: 23212339.8
(22) Anmeldetag: 27.11.2023
(51) Int. Cl.: G06F 16/332, G06F 16/33, G06F 16/36

(54) **COMPUTERIMPLEMENTIERTES VERFAHREN ZUM BEREITSTELLEN VON INFORMATIONEN AUS EINEM ÖKOSYSTEM**

(71) Anmelder: Siemens Aktiengesellschaft, 80333 München (DE)
(72) Erfinder: Steinke, Ines, 81825 München (DE); Thalhofer, Michael, 89231 Neu-Ulm (DE)
(74) Vertreter: Siemens Patent Attorneys

(57) **Zusammenfassung**

Die vorliegende Erfindung betrifft ein computerimplementiertes Verfahren zum Bereitstellen von Informationen aus einem Ökosystem (1), das Ökosystem (1) aufweisend wenigstens eine erste Entität (A) und eine zweite (B) Entität, wobei jede Entität (A, B) wenigstens eine vorbestimmte Eigenschaft aufweist, und die erste Entität (A) und die zweite Entität (B) über wenigstens eine vorbestimmte Beziehung (2) miteinander verbunden sind, das Verfahren aufweisend die folgenden Schritte:
a) Bereitstellen von Daten umfassend je Entität (A, B) die wenigstens eine vorbestimmte Eigenschaft und/oder die wenigstens eine vorbestimmte Beziehung (2) mittels einer Computereinheit (3) und/oder einer Anwendungsschnittstelle an ein Austauschmodul (4);
b) Bereitstellen der Daten (5) an eine zentrale Datenbank (6) ;
c) Empfangen einer Anfrage (7) eines Benutzers;
d) Umwandeln der Anfrage (7) in eine abfragesprachbasierte Abfrage mittels eines künstlichen neuronalen Netzes (8) und Bereitstellen der Abfrage an ein Abfragemodul (9);
e) Ermitteln von für die Abfrage relevanter Daten basierend auf der zentralen Datenbank (6);
f) Bereitstellen der für die Abfrage relevanten Daten an das Abfragemodul (9);
g) Ausgeben der für die Abfrage relevanten Daten an den Benutzer.

## Beschreibung

Die vorliegende Erfindung betrifft ein computerimplementiertes Verfahren zum Bereitstellen von Informationen aus einem Ökosystem, das Ökosystem aufweisend wenigstens eine erste Entität und eine zweite Entität, wobei jede Entität wenigstens eine vorbestimmte Eigenschaft aufweist, und die erste Entität und die zweite Entität über wenigstens eine vorbestimmte Beziehung miteinander verbunden sind.

Ein Ökosystem ist ein sozio-technisches System, wie beispielsweise wirtschaftliche Ökosysteme oder technische Ökosysteme. Ökosysteme im wirtschaftlichen Sinne beispielsweise beziehen sich auf ein Netzwerk von Unternehmen, Organisationen und Einzelpersonen, die in einer bestimmten Branche oder einem bestimmten Markt zusammenarbeiten. Es umfasst alle Akteure, die miteinander interagieren und voneinander abhängig sind, um Werte zu schaffen und zu teilen.

In einem wirtschaftlichen Ökosystem können verschiedene Unternehmen unterschiedliche Rollen spielen, wie zum Beispiel Hersteller, Zulieferer, Händler, Dienstleister oder Kunden. Diese Unternehmen arbeiten oft eng zusammen, um Produkte oder Dienstleistungen zu entwickeln, zu produzieren und zu vermarkten.

Ein Ökosystem kann auch andere Akteure bzw. für das jeweilige Ökosystem relevante Interessensgruppen wie Regierungsbehörden, Forschungseinrichtungen oder Finanzinstitute umfassen, die eine Rolle bei der Unterstützung und Entwicklung des Marktes spielen.

Das Konzept eines Ökosystems betont die Bedeutung der Zusammenarbeit und des Austauschs von Ressourcen, Informationen und Innovationen zwischen den verschiedenen Akteuren. Es ermöglicht eine effizientere Nutzung von Ressourcen und fördert das Wachstum und die Entwicklung der beteiligten Unternehmen.

Ein Ökosystem im wirtschaftlichen Sinn beschreibt demnach einen Verbund von Unternehmen, die durch einen Orchestrator auf eine gemeinsame Wertschöpfung ausgerichtet wird. Dabei übersteigt die Leistung des gesamten Ökosystems aus Sicht der Kunden bzw. Benutzer die Summe der Einzelbeiträge aller Beteiligten.

Zunehmend homogenere Produkte, ein erhöhtes Risiko durch neue Markteintritte oder stagnierende Märkte führen dazu, dass viele Unternehmen sich in ein immer kompetitiveres Umfeld begeben. Um sich in dieser neuen Situation zu behaupten, müssen Unternehmen ihre Innovationsperformance steigern. Dieses Ziel kann beispielsweise durch das gezielte Vernetzen von Unternehmen in Ökosystemen erreicht werden. Unternehmen werden dann nicht mehr als Mitglied einer einzelnen Industrie zugerechnet, sondern als Mitglied eines branchenübergreifenden Systems aus vernetzten Unternehmen, dem sogenannten Ökosystem. Die Entwicklung von autonomen Unternehmen hin zu Ökosystemen wird zunehmend durch die Digitalisierung verstärkt. Durch die Digitalisierung werden Transaktionskosten zwischen Unternehmen verringert, was Kooperationen zwischen Unternehmen immer attraktiver macht und ein Verschwimmen der Branchengrenzen nach sich zieht. Dieser Trend führt dazu, dass sich das klassische Unternehmensbild nachhaltig verändert. Unternehmen und Branchen strukturieren sich zunehmend auf ein höheres Aggregationslevel jenseits der klassischen Branchengrenzen. Diese neue Aggregationsebene ist typischerweise ein Ökosystem.

Aus dem Stand der Technik sind Ökosysteme lediglich als eine Ansammlung von Daten bekannt. Diese Ansammlung von Daten können von Benutzern nur mit sehr eingeschränkter Effizienz genutzt werden, da ein simples Darstellen der Menge von Daten unübersichtlich und wenig hilfreich bei einer gezielten Fragestellung ist.

Es ist die Aufgabe der vorliegenden Erfindung, die aus dem Stand der Technik bekannten Nachteile zumindest teilweise zu überwinden. Es ist insbesondere die Aufgabe der vorliegenden Erfindung, eine Lösung bereitzustellen, durch welche eine effizientere Entwicklung und/oder Nutzung eines Ökosystems ermöglicht wird.

Die Lösung der Aufgabe erfolgt erfindungsgemäß zumindest zum Teil durch ein computerimplementiertes Verfahren mit den Merkmalen des Anspruchs 1.

Die Lösung der Aufgabe erfolgt erfindungsgemäß ferner zumindest zum Teil durch die Verwendung mit den Merkmalen des Anspruchs 10. Bevorzugte Ausgestaltungen der Erfindung sind in den Unteransprüchen, in der Beschreibung oder den Figuren beschrieben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Beschrieben wird ein computerimplementiertes Verfahren zum Bereitstellen von Informationen aus einem Ökosystem, das Ökosystem aufweisend wenigstens eine erste Entität und eine zweite Entität, wobei jede Entität wenigstens eine vorbestimmte Eigenschaft aufweist, und die erste Entität und die zweite Entität über wenigstens eine vorbestimmte Beziehung miteinander verbunden sind, das Verfahren aufweisend die folgenden Schritte:
a) Bereitstellen von Daten umfassend je Entität die wenigstens eine vorbestimmte Eigenschaft und/oder die wenigstens eine vorbestimmte Beziehung mittels einer Computereinheit und/oder einer Anwendungsschnittstelle an ein Austauschmodul;
b) Bereitstellen der Daten an eine zentrale Datenbank;
c) Empfangen einer Anfrage eines Benutzers;
d) Umwandeln der Anfrage in eine abfragesprachbasierte Abfrage mittels eines künstlichen neuronalen Netzes und Bereitstellen der Abfrage an ein Abfragemodul;
e) Ermitteln von für die Abfrage relevanter Daten basierend auf der zentralen Datenbank;
f) Bereitstellen der für die Abfrage relevanten Daten an das Abfragemodul;
g) Ausgeben der für die Abfrage relevanten Daten an den Benutzer.

Ein derartiges computerimplementiertes Verfahren weist gegenüber Lösungen aus dem Stand der Technik deutlich Vorteile auf, insbesondere bei der gezielten Lösung einer Anfrage an das Ökosystem.

Eine "Entität" wird vorliegend insbesondere als ein Interessensvertreter oder ein Unternehmen verstanden. Demnach ist das "Ökosystem" insbesondere als ein Business Ökosystem zu verstehen. Ein Business-Ökosystem ist ein Netzwerk von Unternehmen, Organisationen und Einzelpersonen, die zusammenarbeiten, um gemeinsame Ziele zu erreichen und Wertschöpfung zu generieren.

Das physische Ökosystem wird durch Entitäten, Eigenschaften und Beziehungen in einem digitalen Ökosystem durch einen digitalen Zwilling dargestellt.

Die Entitäten geben Daten bzw. Informationen, wie beispielsweise Metadaten in Form von beispielsweise Partnerprofilen, und/oder Inhaltsdaten in Form von beispielsweise Produktprofile und/oder Beziehungsdaten in Form von beispielsweise Kollaborationsprofilen über spezifische Geräte, insbesondere Computer und/oder Apps für mobile Endgeräte in das Austauschmodul ein. Alternativ oder zusätzlich können Daten über automatisierte Adapter und APIs (z. B. Maschinen-HW/SW-Adapter) übermittelt werden, die beispielsweise Informationen über den Produktbestand, Produktzertifikate, Qualitätseigenschaften, Produktprofile oder den Maschinenstatus liefern.

Vorzugsweise ist vorgesehen, dass die Daten zumindest teilweise verschlüsselt werden, bevor sie an die zentrale Datenbank übermittelt werden. Insbesondere für bestimmte Interessensgruppe können die Daten auch unverschlüsselt sein.

Ein Datenaustausch-Tool tauscht die übermittelten Daten bzw. Informationen der Beteiligten über sichere Schnittstellen, insbesondere über eine gesicherte Blockchain und Protokolle mit der insbesondere cloudbasierten Datenbank aus. Die Daten bzw. Informationen werden in der insbesondere Cloud gehosteten Datenbank gespeichert.

Vorzugsweise ist vorgesehen, dass die Anfrage des Benutzers narrativ und/oder sprachbasiert und/oder formalisiert ist.

Basierend auf den Daten aus der Datenbank können Abfragen durch ein dezidiertes Tool generiert werden, z.B. durch eine geeignete Abfragesprache, wie beispielsweise SPARQL oder SQL. Mittels eines künstlichen neuronalen Netzes wird eine beispielsweise narrative sprachbasierte Anfrage eines Benutzers in eine Abfrage übersetzt.

Es ist somit ein maßgeblicher Punkt der Erfindung, dass eine von einem Benutzer in herkömmlicher Sprache formulierte und/oder formalisierte Fragestellung beispielsweise in Form einer narrativen sprachbasierten Anfrage mittels eines künstlichen neuronalen Netzes in eine Datenabfrage umformuliert wird, sodass lediglich die Daten aus einer oder mehreren Datenbanken automatisch gewonnen werden, die für die ursprüngliche Fragestellung relevant sind. Die Komplexität des Ökosystems wird auf das spezifische Interesse des Nutzers reduziert.

Auf diese Weise werden aus einem Ökosystem nur die Daten extrahiert, die bezogen auf die jeweilige Anfrage relevant sind. Welche Daten relevant sind, wird bei der Umwandlung der Anfrage in die Abfrage berücksichtigt und die Abfrage entsprechend formuliert. Die Umwandlung bzw. Übersetzung der Anfrage in die Abfrage erfolgt mittels eines künstlichen neuronalen Netzes. Beispielsweise wird dazu wenigstens eines der KI-Modelle GPT-3.5, GPT-4, Claude-2 und/oder PaLM 2 verwendet.

Gemäß einer bevorzugten Weiterbildung der Erfindung umfasst das Verfahren den folgenden weiteren Verfahrensschritt: g`) Erzeugen eines Wissensgraphen basierend auf den für die Abfrage relevanten Daten mittels eines zweiten künstlichen neuronalen Netzes und Ausgeben des Wissensgraphen an den Benutzer.

Basierend auf den Daten aus der Datenbank entwirft ein Wissensgraphenmodul automatisch alle Wissensgraphen mittels eines zweiten künstlichen neuronalen Netzes, die für das Ökosystemmanagement relevant sind. Im Bereich der Wissensdarstellung und der Schlussfolgerungen ist ein Wissensgraph eine Wissensbasis, die ein graphenstrukturiertes Datenmodell oder eine Topologie zur Integration von Daten verwendet. Wissensgraphen werden häufig verwendet, um miteinander verknüpfte Beschreibungen von Entitäten - Objekten, Ereignissen, Situationen oder abstrakten Konzepten - zu speichern und dabei auch die der verwendeten Terminologie zugrunde liegende Semantik zu kodieren. Wissensgraphen können beispielsweise für detaillierte End-to-End-Vertriebsworkflows erzeugt werden, die bis in tiefere Hierarchieebenen, wie insbesondere Abteilungsebene und/oder Rollenebene, eines Unternehmens reichen.

Gemäß einer bevorzugten Weiterbildung der Erfindung umfasst das Verfahren den folgenden weiteren Verfahrensschritt: g*) Ausgeben der relevanten Daten und/oder des Wissensgraphen in einer zweidimensionalen oder dreidimensionalen visuellen Darstellung.

Die Ausgabe der zuvor explizit für die jeweilige Anfrage ermittelten Daten in Form einer zwei- oder dreidimensionalen Darstellung ermöglicht ein effizientes und/oder intuitives Arbeiten mit dem Ökosystem.

b1) Erzeugen eines digitalen Zwillings basierend auf den bereitgestellten verschlüsselten Daten.

Basierend auf dem physikalischen Ökosystem wird anhand der übermittelten Daten ein digitaler Zwilling erzeugt. Ein digitaler Zwilling wird vorliegend insbesondere als virtuelle Repräsentation des physikalischen Ökosystems verstanden. Es handelt sich um eine digitale Kopie, die alle relevanten Eigenschaften, Relationen, Interaktionen und/oder Verhaltensweisen des realen Ökosystems enthält. Der digitale Zwilling wird insbesondere in Echtzeit mit Daten aus dem physikalischen Ökosystem aktualisiert und ermöglicht es, verschiedene Szenarien zu simulieren, zu analysieren und/oder Vorhersagen zu treffen. Durch den Einsatz eines digitalen Zwillings können die Daten effizienter abgefragt, Kosten reduziert und Risiken minimiert werden.

Gemäß einer bevorzugten Weiterbildung der Erfindung umfasst das Verfahren den folgenden weiteren Verfahrensschritt:
b2) Anwenden wenigstens eines Ontologiemodells auf die bereitgestellten verschlüsselten Daten.

Eine "Ontologie" wird insbesondere als eine meist sprachlich gefasste und formal geordnete Darstellung einer Menge von Begriffen und der zwischen ihnen bestehenden Beziehungen in einem bestimmten Gegenstandsbereich verstanden. Sie wird dazu genutzt, Wissen in digitalisierter und formaler Form zwischen Prozessen und Diensten auszutauschen. Wissen umfasst dabei sowohl Allgemeinwissen als auch Wissen über sehr spezielle Themengebiete und Vorgänge. Ein "Ontologiemodell" wird insbesondere als eine Summe von Regeln verstanden, nach denen die Informationen verarbeitet werden. Ontologien enthalten Interferenz- und Integritätsregeln, also Regeln zu Schlussfolgerungen und zur Gewährleistung ihrer Gültigkeit. Im Unterschied zu einer Taxonomie, die nur eine hierarchische Untergliederung bildet, stellt eine Ontologie ein Netzwerk von Informationen mit logischen Relationen dar.

Gemäß einer bevorzugten Weiterbildung der Erfindung umfasst das Verfahren den folgenden weiteren Verfahrensschritt: h) Durchführen und/oder Wiederholen der Schritte a) und b) in Echtzeit. Um eine optimale Nutzung zu gewährleisten, ist es erforderlich, dass die Entitäten, also beispielsweise die Unternehmen, die übermittelten Daten stets aktuell halten, sodass die ausgegebenen Informationen auch dem aktuellen Stand entsprechen. Durch die Übermittlung der Daten in Echtzeit, kann dies gewährleistet werden.

Gemäß einer bevorzugten Weiterbildung der Erfindung umfasst das Verfahren den folgenden weiteren Verfahrensschritt: i) Erzeugen von Unter-Ökosystemen basierend auf der zentralen Datenbank und/oder dem digitalen Zwilling. Die Unter-Ökosysteme sind als Extraktion aus dem Ökosystem zu verstehen. Die Daten für ein Unter-Ökosystem werden aus den Gesamtdaten anfragenspezifisch extrahiert und gefiltert, sodass die einzelnen Unter-Ökosysteme abhängig von der Anfrage des Benutzers generiert werden können. Benötigte Informationen können so schneller bereitgestellt werden. Zudem ist eine grafische Darstellung in Form von überlagernden Strukturen bzw. Schichten möglich, sodass ein dreidimensionales Modell je nach Anfrage stark vereinfacht werden kann.

Gemäß einer bevorzugten Weiterbildung der Erfindung umfasst die wenigstens eine vorbestimmte Eigenschaft tangible und/oder intangible Güter, wie beispielsweise Produkte, Dienstleistungen, Daten, Informationen, Ideen, Konzepte, Bauteile, Komponenten, etc. Gemäß einer weiteren bevorzugten Weiterbildung der Erfindung umfasst die wenigstens eine vorbestimmte Beziehung eine Geschäftsbeziehung und/oder eine Kollaboration und/oder eine Interaktion. Als Interaktionen werden insbesondere Innovations- oder Entwicklungskooperationen, Wertschöpfungsbeziehungen, Beziehungsqualitäten, wie beispielsweise gute oder schlechte, starke, mittlere oder schwache Beziehungen, oder Beziehungsquantitäten, wie beispielsweise Mengenaustausch oder Umsatzgröße, oder jegliche Form anderer Beziehungen verstanden.

Hinsichtlich weiterer technischer Merkmale und Vorteile des computerimplementierten Verfahrens wird auf die Beschreibung der Verwendung und die Figuren verwiesen.

Beschrieben wird ferner die Verwendung des computerimplementierten Verfahrens zum Erzeugen eines intelligenten Ökosystems. "Intelligent" bedeutet vorliegend, dass ein bestmöglich erwarteter Anfrageoutput eines extrahierten visualisierten Ökosystems erzeugt werden kann. Zudem bedeutet "intelligent" insbesondere das automatische Formulieren einer Anfragen-spezifischen Abfrage und generieren von Ausgabedaten, die auf das spezifische Interesse des Nutzers reduziert sind.

Weitere Einzelheiten, Merkmale und Vorteile des Gegenstandes der Erfindung ergeben sich aus den Unteransprüchen sowie aus der nachfolgenden Beschreibung der Figuren. In den Figuren zeigen:
- FIG 1:: ein visualisiertes Ökosystem gemäß dem Stand der Technik;
- FIG 2:: eine schematische Darstellung eines computerimplementierten Verfahrens gemäß einem bevorzugten Ausführungsbeispiel der Erfindung;
- FIG 3:: ein extrahiertes Ökosystem, das aus einem visualisierten Ökosystem mittels eines computerimplementierten Verfahrens gemäß einem bevorzugten Ausführungsbeispiel der Erfindung erzeugt wurde.

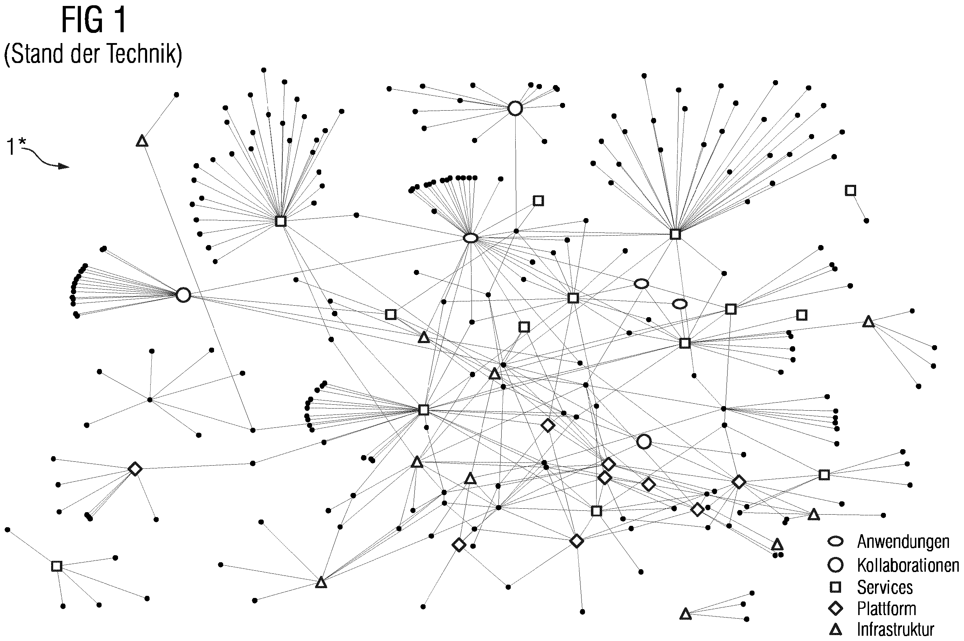

FIG 1 zeigt ein visualisiertes Ökosystem gemäß dem Stand der Technik. Es ist erkennbar, dass Informationen nur schwer ermittelt werden können. Die Zusammenhänge zwischen den einzelnen Entitäten sind mittels Graphen und Symbole dargestellt. Durch die große Menge an Informationen entsteht eine hohe Anzahl an Datenpunkten, deren Verbindungen die grafische Gesamtdarstellung unübersichtlich erscheinen lässt.

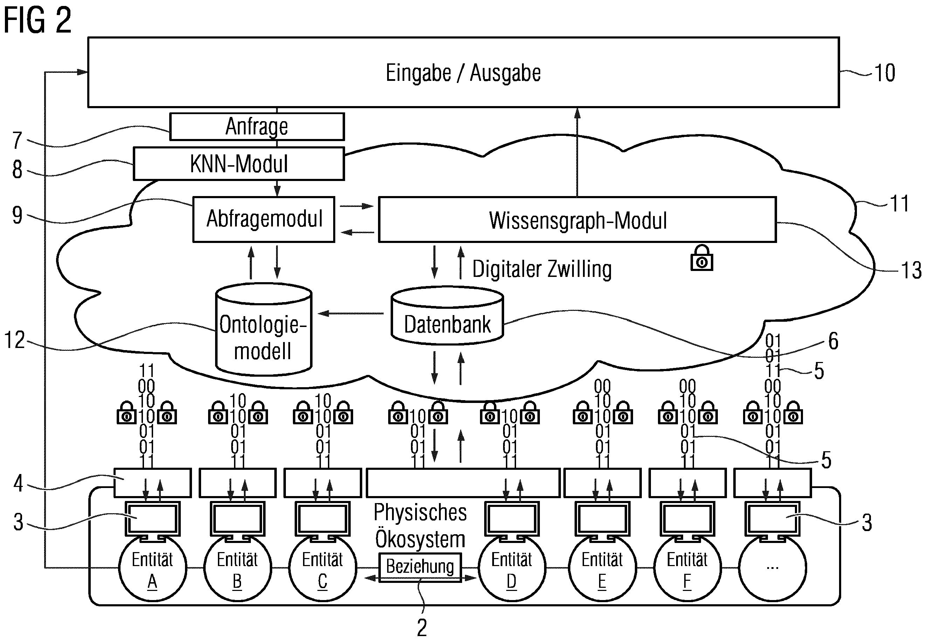

Um die Grundvoraussetzung einer vereinfachten und Benutzerspezifischen Darstellung zu schaffen, wird das in FIG 2 schematisch dargestellte computerimplementierte Verfahren verwendet.

FIG 2 zeigt den Ablauf des computerimplementierten Verfahrens in einer schematischen Darstellung. Die mehreren Entitäten A-F eines physischen Ökosystems übermitteln alle relevanten Daten mittels einer Computereinheit 3 oder APIs direkt von der Produktionsmaschine an das Austauschmodul 4. Zu den relevanten Daten gehören vor Allem die Informationen zu Produkten oder Dienstleistungen, wie beispielsweise die Verfügbarkeit, und die Informationen zu den Beziehungen untereinander, beispielsweise zwischen Entität A und Entität B oder zwischen Entität C und Entität F und so weiter. Diese Daten werden verschlüsselt und als verschlüsselte Daten 5 an die zentrale Datenbank 6 übertragen. Ausgehend von diesen verschlüsselten Daten 5 wird ein digitaler Zwilling 11 erzeugt, der sich als digitales Abbild in der Daten-Cloud befindet. Die Menge an Informationen wird anhand eines Ontologiemodells 12 sortiert und Verknüpfungen zueinander werden aufgebaut.

Wird nun über das Ein-/Ausgabemodul 10 eine Anfrage 7 von einem Benutzer gestellt, wird diese in herkömmlicher Sprache formulierte Anfrage 7 mittels eines KNN-Moduls 8 in eine Abfrage in abfragespezifischer Sprache umformuliert und an das Abfragemodul 9 bereitgestellt. Das Abfragemodul 9 wird mit entsprechenden Informationen aus dem Ontologiemodell 12, der zentralen Datenbank 6 und/oder dem digitalen Zwilling 11 gespeist. Die gewonnenen Daten werden mittels des Wissensgraph-Moduls 13 in einen Wissensgraphen umgewandelt, der über das Ein-/Ausgabemodul 10 für die weitere Visualisierung bereitgestellt wird. Auf diese Weise werden aus einem Ökosystem nur die Daten extrahiert, die bezogen auf die jeweilige Anfrage relevant sind. Welche Daten relevant sind, wird bei der Umwandlung der Anfrage in die Abfrage berücksichtigt und die Abfrage entsprechend formuliert.

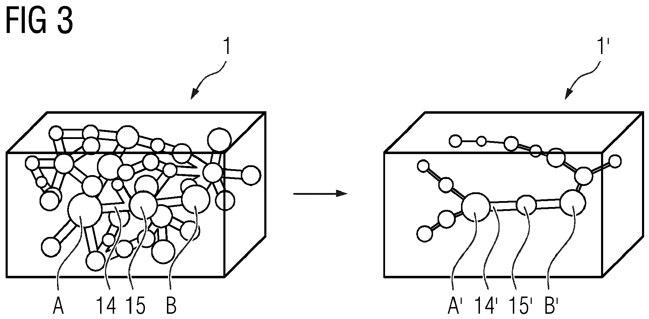

Fig. 3 zeigt auf der linken Seite ein dreidimensionales Modell eines visualisierten Ökosystems 1. Mittels des computerimplementierten Verfahrens aus Fig. 2 werden nur die anfragenspezifischen Daten extrahiert und als visuelles extrahiertes Ökosystem 1' erzeugt und dem Benutzer angezeigt. Das Extrahieren von Daten bezieht sich vor allem auf die Auswahl und Anzeigen von Entitäten und Relationen zu einen anfragenspezifischen Thema oder einer anfragenspezifischen Fragestellung. Dementsprechend werden dem Benutzer nur für die jeweilige Anfrage relevante Entitäten A', B`, wie beispielsweise Unternehmen, Personen und/oder Maschinen, deren Beziehung 14', wie beispielsweise bilateral oder unilateral, und die relevante Beziehungseigenschaft 15', wie beispielsweise Kommunikation, Innovationszusammenarbeit, Ressourcenaustausch, rechtliche Beziehung und/oder Wertschöpfungsbeziehung, ausgegeben.

Unabhängig vom grammatikalischen Geschlecht eines bestimmten Begriffes sind Personen mit männlicher, weiblicher oder anderer Geschlechteridentität mit umfasst.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Computerimplementiertes Verfahren zum Bereitstellen von Informationen aus einem Ökosystem (1), das Ökosystem (1) aufweisend wenigstens eine erste Entität (A) und eine zweite (B) Entität, wobei jede Entität (A, B) wenigstens eine vorbestimmte Eigenschaft aufweist, und die erste Entität (A) und die zweite Entität (B) über wenigstens eine vorbestimmte Beziehung (2) miteinander verbunden sind, das Verfahren aufweisend die folgenden Schritte:
a) Bereitstellen von Daten umfassend je Entität (A, B) die wenigstens eine vorbestimmte Eigenschaft und/oder die wenigstens eine vorbestimmte Beziehung (2) mittels einer Computereinheit (3) und/oder einer Anwendungsschnittstelle an ein Austauschmodul (4) ;
b) Bereitstellen der Daten (5) an eine zentrale Datenbank (6);
c) Empfangen einer Anfrage (7) eines Benutzers;
d) Umwandeln der Anfrage (7) in eine abfragesprachbasierte Abfrage mittels eines künstlichen neuronalen Netzes (8) und Bereitstellen der Abfrage an ein Abfragemodul (9);
e) Ermitteln von für die Abfrage relevanter Daten basierend auf der zentralen Datenbank (6);
f) Bereitstellen der für die Abfrage relevanten Daten an das Abfragemodul (9);
g) Ausgeben der für die Abfrage relevanten Daten an den Benutzer.

2. Computerimplementiertes Verfahren nach Anspruch 1, mit folgendem weiteren Verfahrensschritt:
g`) Erzeugen eines Wissensgraphen basierend auf den für die Abfrage relevanten Daten mittels eines zweiten künstlichen neuronalen Netzes und Ausgeben des Wissensgraphen an den Benutzer.

3. Computerimplementiertes Verfahren nach Anspruch 1 oder 2, mit folgendem weiteren Verfahrensschritt:
g*) Ausgeben der relevanten Daten und/oder des Wissensgraphen in einer zweidimensionalen oder dreidimensionalen visuellen Darstellung.

4. Computerimplementiertes Verfahren nach einem der Ansprüche 1 bis 3, mit folgendem weiteren Verfahrensschritt:
b1) Erzeugen eines digitalen Zwillings (11) basierend auf den bereitgestellten Daten (5).

5. Computerimplementiertes Verfahren nach einem der Ansprüche 1 bis 4, mit folgendem weiteren Verfahrensschritt:
b2) Anwenden wenigstens eines Ontologiemodells (12) auf die bereitgestellten Daten (5).

6. Computerimplementiertes Verfahren nach einem der Ansprüche 1 bis 5, mit folgendem weiteren Verfahrensschritt:
h) Durchführen und/oder Wiederholen der Schritte a) und b) in Echtzeit.

7. Computerimplementiertes Verfahren nach einem der Ansprüche 1 bis 6, mit folgendem weiteren Verfahrensschritt:
i) Erzeugen von Unter-Ökosystemen basierend auf der zentralen Datenbank (6) und/oder dem digitalen Zwilling (11) .

8. Computerimplementiertes Verfahren nach einem der Ansprüche 1 bis 7, wobei die wenigstens eine vorbestimmte Eigenschaft wenigstens ein tangibles und/oder ein intangibles Gut umfasst.

9. Computerimplementiertes Verfahren nach einem der Ansprüche 1 bis 8, wobei die wenigstens eine vorbestimmte Beziehung (2) eine Geschäftsbeziehung und/oder eine Kollaboration umfasst.

10. Verwenden eines computerimplementierten Verfahrens nach einem der Ansprüche 1 bis 9 zum Erzeugen eines intelligenten Ökosystems (1).
